(19) Europäisches Patentamt
European Patent Office
Office européen des brevets

(11) Veröffentlichungsnummer: **0 258 689 B1**

(12) **EUROPÄISCHE PATENTSCHRIFT**

(45) Veröffentlichungstag der Patentschrift: **02.10.91**

(51) Int. Cl.[5]: **C08L 69/00**, C08L 83/10, C08L 23/20, C08L 23/06

(21) Anmeldenummer: **87111534.1**

(22) Anmeldetag: **10.08.87**

(54) **Mischungen aus Polydiorganosiloxan-Polycarbonat-Blockcokondensaten und Polyisobutylenen.**

(30) Priorität: **20.08.86 DE 3628258**

(43) Veröffentlichungstag der Anmeldung:
**09.03.88 Patentblatt 88/10**

(45) Bekanntmachung des Hinweises auf die Patenterteilung:
**02.10.91 Patentblatt 91/40**

(84) Benannte Vertragsstaaten:
**DE FR GB IT NL**

(56) Entgegenhaltungen:
**EP-A- 0 135 794**
**WO-A-80/00084**
**DE-A- 3 202 477**
**DE-A- 3 245 467**
**US-A- 3 431 224**

**PARENT ABSTRACTS OF JAPAN Band 6, nr. 197 (C-128)(1075) 6. Oktober 1982; & JP-A-57108151 ( TEIJIN KASEI K.K. ) 06.07.1982**

**CHEMICAL ABSTRACTS Band 68, Nr. 14, 1.Apr.1968, Seite 584, Abstract Nr. 60377S; & JP-B-6718823 (TEIJIN LTD.) 26.09.1967**

(73) Patentinhaber: **BAYER AG**

**W-5090 Leverkusen 1 Bayerwerk(DE)**

(72) Erfinder: **Paul, Winfried, Dr.**
**Bethelstrasse 22**
**W-4150 Krefeld(DE)**
Erfinder: **Grigo, Ulrich, Dr.**
**Michelsheide 9**
**W-4152 Kerpen(DE)**
Erfinder: **Nouvertné, Werner, Dr.**
**Scheiblerstrasse 95**
**W-4150 Krefeld(DE)**
Erfinder: **Müller, Peter Rolf, Dr.**
**Paul-Klee-Strasse 76**
**W-5090 Leverkusen(DE)**

**EP 0 258 689 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die Erfindung betrifft thermoplastische Mischungen aus aromatischen Polycarbonaten, die Polysiloxanblöcke einkondensiert enthalten, und Polyisobutylenen.

Aus US-A-3 431 224 sind Formmassen bekannt, die Polycarbonate und Polyolefine, z.B. Polyisobutylen, enthalten. Sie weisen eine gegenüber Polycarbonat verbesserte Widerstandsfähigkeit gegen Rißbildung auf, die unter Umwelteinflüssen, z.B. Kontakt mit organischen Lösungsmitteln wie Aceton oder Tetrachlcrkohlenstoff oder mit Alkalien eintritt.

Aus der JP-A-72-16045 sind gasfaserhaltige Polycarbonate bekannt, die außerdem Polyisobutylen, Polypropylen, Butylkautschuk und/oder SBR in Mengen von 0,3 - 10 Teilen enthalten (nur als Chem. Abstr. Ref. vorliegend).

Polydiorganosiloxan-Polycarbonat-Blockcokondensaten sind z.B. aus US-A-3 189 662 bekannt. In der einschlägigen Literatur werden ihre verbesserten mechanischen Eigenschaften bei tiefen Temperaturen beschrieben (z.B. B.M. Beach, R.P. Kambour und A.R. Schultz, J. Polym. Sci., Polym. Lett. Ed. 12, 247 (1974)).

Der Einsatz thermoplastischer Formmassen auf dem Kfz-Sektor z.B. für Karosserieteile stellt sehr hohe technologische Anforderungen. Gefragt sind hier insbesondere hohe Zähigkeiten, hohe Kraftstoffbeständigkeit und ausgezeichnete Verarbeitungseigenschaften zur wirtschaftlichen Herstellung der großen Teile.

Eine Verbesserung der Kraftstoffbeständigkeit von Bisphenol-A-Homopolycarbonat durch Polyisobutylen wird -schon bei geringen Zusätzen von 2,5 Gew.-% - mit dem Nachteil erkauft, daß insbesondere im Bereich von Angüssen starke Delaminationen auftreten. Die Fleißnahtfestigkeit der Blends ist im Vergleich zu reinem Polycarbonat so stark herabgesetzt, daß derartige Blends nicht eingesetzt werden können.

Es war daher überraschend, daß durch Einsatz eines Polycarbonats, welches geringe Anteile Polysiloxanblöcke einkondensiert enthält, Blends mit Polyisobutylen erhalten werden können, die weder Schwächung der Zusammenfließnähte noch Delamination zeigen, und zudem eine wesentliche Erhöhung der Kraftstoffbeständigkeit mitbringen.

Gegenstand der vorliegenden Erfindung sind somit Mischungen aus

A) 95 bis 99,5 Gew.-% Polycarbonat und

B) 5 bis 0,5 Gew.-% Polyisobutylen - Homopolymeren oder Poly - Isobutylen - Isopren - Copolymeren mit einem Isopren - Gehalt von 0,5 bis 7 Gew.-%,

wobei sich die Prozentangaben jeweils auf die Summe A + B beziehen,

die dadurch gekennzeichnet sind, daß das Polycarbonat A ein Polydiorganosiloxan-Polycarbonat-Blockcokondensat mit einer relativen Viskosität (gemessen an einer Lösung von 0,5 g Blockcokondensat in 1 dl Dichlormethan bei 25 °C) von 1,15 bis 1,38, vorzugsweise von 1,20 bis 1,35, und einem Gehalt an Polydiorganosiloxan-Einheiten von 0,5 bis 10 Gew.-%, vorzugsweise von 1 bis 7 Gew.-%, ist, wobei diese Polydiorganosiloxan-Einheiten im Mittel 5 bis 100, vorzugsweise 20 bis 80, Siliciumatome je Einheit enthalten.

Bevorzugte Polycarbonatpolydiorganosiloxan-Blockcokondensate A enthalten Diorganosiloxaneinheiten der Formel

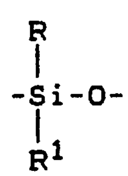

(I)

worin

R und $R^1$ unabhängig voneinander $C_1$-$C_{20}$-, vorzugsweise $C_1$-$C_6$-Alkyl, $C_6$-$C_{14}$-, vorzugsweise $C_6$-Aryl bedeuten, wobei die Alkyl- und Arylreste einmal bis vollständig durch Fluor, Chlor oder Brom substituiert sein können.

Bevorzugte Reste R und $R^1$ umfassen Ethyl, Propyl, n- und tert. -Butyl, Chlormethyl, Trifluorpropyl, Phenyl, Chlorphenyl, Naphthyl, insbesondere Methyl.

90 bis 99,5, vorzugsweise 93 bis 99 Gew.-% des Blockcokondensats A bestehen aus Carbonylgruppen, Diphenolresten, gegebenenfalls Resten von Verzweigungsmitteln und gegebenenfalls aus Endgruppen.

Bevorzugte Diphenolreste entsprechen beispielsweise den Formeln

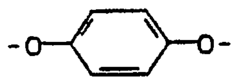

(II)

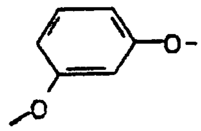

(III) und

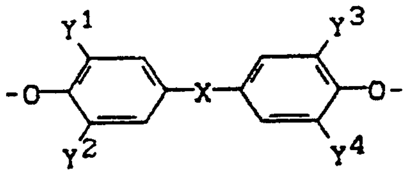

(IV)

worin

X eine Einfachbindung,

$-CH_2-$, 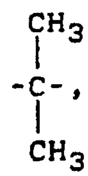, 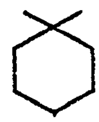, $-O-$,

$-S-$, $-SO_2-$ oder 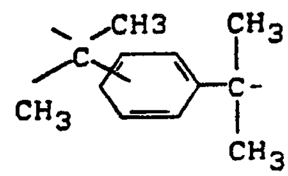

und

$Y^1$ bis $Y^4$ unabhängig voneinander Wasserstoff, $C_1$-$C_4$-Alkyl, vorzugsweise Methyl, oder Halogen, vorzugsweuse Chlor oder Brom, bedeuten.

Bevorzugte Diphenolreste sind beispielsweise die Reste von
2,2-Bis-(4-hydroxyphenyl)-propan,
1,1-Bis-(4-hydroxyphenyl)-cyclohexan,
2,2-Bis-(3,5-dichlor-4-hydroxyphenyl)-propan,
2,2-Bis-(3,5-dimethyl-4-hydroxyphenyl)-propan,
Bis-(3,5-dimethyl-4-hydroxyphenyl)-ethan,
Bis-(3,5-dimethyl-4-hydroxyphenyl)-methan und
Bis-(4-hydroxyphenyl)-sulfid.

Bevorzugte Verzweigungsmittel für die Blockcokondensate A sind mindestens trifunktionelle Verbindungen, wie sie z.B. in den DE-A-1 570 533 und 1 595 762 sowie in der US-A-3 544 514 beschrieben sind, nämlich vorzugsweise dreiwertige Phenole, aromatische Tricarbonsäuren und Hydroxycarbonsäuren mit mindestens drei funktionellen Gruppen. Beispiele bevorzugter Verzweigungsmittel sind
2,4-Bis-(4-hydroxyphenyl-isopropyl)-phenol,
2,6-Bis-(2'-hydroxy-5'-methylbenzol)-4-methylphenol,
2-(4-Hydroxyphenyl)-2-(2,4-dihydroxyphenyl)-propan,
1,4-Bis-(4,4'-dihydroxytriphenyl-methyl)-benzol,
2,4-Dihydroxybenzoesäure, Trimesinsäure, Cyanurchlorid,
3,3-Bis-(4-hydroxyphenyl)2-oxo-2,3-dihydroindol sowie
3,3-Bis-(4-hydroxy-3-methyl-phenyl)-2-oxo-2,3-dihydroindol

Wenn die Blockcokondensate A in verzweigter Form eingesetzt werden sollen, beträgt die Menge verzweigender Gruppen in der Regel 0,05 bis 2 Mol-%, bezogen auf die Diphenolreste des Blockcokondensats A.

Bevorzugte Endgruppen für die Blockcokondensate A sind Reste von Phenol, Benzoesäure, Mono- und Dialkylphenolen und Mono- und Dialkylbenzoesäuren, deren Alkylsubstituenten insgesamt bis zu 20 C-Atomen pro Endgruppe tragen können. Besonders bevorzugte Endgruppen entsprechen der Formel

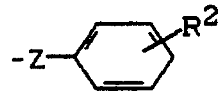

(V)

worin
Z -O- oder

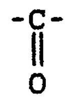

bedeutet und $R^2$ -H oder $-C_1-C_{15}$-Alkyl bedeutet.

Beispiele bevorzugter Endgruppen sind die Reste von Phenol, p-tert.-Butyl-phenol, p-Isooctyl-phenol, p-Nonylphenol, 3,5-Di-tert.-butyl-phenol, 2-(3,5-Dimethylheptyl)-phenol und 4-(3,5-Dimethylheptyl)-phenol.

Anstelle der freien Phenole können deren Halogenkohlensäureester, anstelle der Carbonsäuren ihre Säurechloride eingesetzt werden.

Die Menge der Endgruppen beträgt vorzugsweise 1 bis 10 Mol-%, bezogen auf die Diphenolreste des Blockcokondensats A.

Die Herstellung der Blockcokondensate A kann beispielsweise aus $\alpha$, $\omega$-Bis (hydroxyaryloxy)-polydiorganosiloxanen, Bisphenolen, Kohlensäurederivaten, z.B. Phosgen, gegebenenfalls Kettenabbrechern und gegebenenfalls Verzweigungsmitteln nach dem Zweiphasengrenzflächenverfahren unter üblichen Bedingungen erfolgen. Auch das Umesterungs- und das sog. Pyridinverfahren sind zur Herstellung geeignet.

Die Zahl der Siliciumatome pro Einheit (= mittlere Siloxanblocklänge) kann man bei der Herstellung durch Bestimmung der Endgruppen am Polysiloxan-Ausgangsmaterial ermitteln.

Die Ermittlung des Polymerisationsgrades der Siloxanblöcke am fertigen Blockcokondensat wird durch Verseifung des Polycarbonatanteils möglich. Der nicht verseifbare Siloxanblock wird so der polymeranalytischen Untersuchung (GPC, HPLC, Endgruppenbestimmung) zugänglich.

Die Komponente A kann auch eine Mischung aus üblichen polysiloxanfreien, thermoplastischen Polycarbonaten mit einer relativen Viskosität von 1,15 bis 1,38 und Polydiorganosiloxan-Polycarbonat-Blockcokondensat mit einer relativen Viskosität zwischen 1,15 und 2,5 sein, die so zusammengesetzt ist, daß der Gesamtgehalt an Polydiorganosiloxan-Einheiten bezogen auf Komponente A wiederum 0,5 bis 10 Gew,-%, vorzugsweise 1 bis 7 Gew.-%, beträgt.

In den Fällen, in denen die Komponente A eine Mischung aus siloxanhaltigen Polycarbonaten und siloxanfreien Polycarbonaten ist, können die siloxanhaltigen Polycarbonate auch einen Gehalt an Polydiorganosiloxan-Einheiten von mehr als 10 Gew.-% enthalten, sofern durch Abmischung mit den siloxanfreien Polycarbonaten der Gehalt in der Polycarbonatmischung wiederum zwischen 0,5 und 10 Gew.-% liegt.

Polyisobutylene gemäß Komponente B sind Polyisobutylen-Homopolymere oder Poly-Isobutylen-Isopren-Copolymere mit einem Isoprengehalt von 0,5 bis 7 Gew.-% bezogen auf Copolymer, gegebenenfalls vorzugsweise Isobutylen-Isopren-Copolymere mit einem Isoprengehalt von 0,5 bis 3 Gew.-% bezogen auf Copolymer, deren Molekulargewicht $M_v$ (Viskositätsmittel) im Bereich von etwa 50.000 bis etwa 4.000.000, vorzugsweise zwischen 50.000 und 2.000.000 liegt.

Derartige Polyisobutylene-Homopolymere und Isobutylen-Isopren-copolymere und Verfahren für ihre Herstellung sind bekannt und die Produkte im Handel erhältlich. Beispiele für im Handel erhältliche Polyisobutylene sind Oppanol B 12® und B 80® der BASF sowie Vistanex MM L-80® der Exxon Chemical Co., Beispiel für im Handel erhältliche Copolymere ist Exxon Butyl 268® des letztgenannten Herstellers.

Zur Molekulargewichtsbestimmung der Komponente B wird die Lösungsviskosität einer 0,2 g Isobutylen-Polymer in 1 dl Isooctan enthaltenden Lösung herangezogen, aus der über die Schulz-Blaschke-Beziehung der Staudinger-Index und das Viskositätsmittel zugänglich sind (s. Technicsches Merkblatt M2356d der BASF vom Mai 1980).

Zur weiteren Erhöhung der Benzinfestigkeit der erfindungsgemäßen Mischungen aus Komponenten A

und B können zusätzlich bis zu 5 Gew.-%, bezogen auf das Gesamtgewicht aus den Komponenten A+B, Ethylenhomo- bzw. -co-polymerisate, deren Reste bis zu 30 Gew.-% bezogen auf Ethylencopolymerisat, aus Resten anderer copolymerisierbarer Monomerer wie z.B. (Meth-)acrylsäure bzw. -ester bestehen, zugesetzt werden.

Derartige Homo- und Copolymerisate des Ethylens und Verfahren zu ihrer Herstellung sind bekannt und die Produkte im Handel erhältlich. Beispiel für im Handel erhältliche Polyethylene ist Verstolen A 6016® der Chemischen Werke Hüls, Beispiel für ein Copolymer aus Ethylen, Acrylsäure und Acrylsäureester (Terpolymer) ist Lupolen A 2910 M® der BASF.

Die erfindungsgemäßen Mischungen können übliche Verarbeitungshilfsmittel, wie z.B. Fließ- und Entformungsmittel, Füll- und Verstärkungsmittel, wie z.B. Talk, Kreide oder Glasfasern, Farbpigmente, wie z.B. Titandioxid oder Ruß und/oder außerdem Brandschutzmittel, wie z.B. Halogenverbindungen, Antimonoxid, enthalten.

Die Herstellung der erfindungsgemäßen Mischungen aus den Komponenten geschieht vorzugsweise in Extrudern. Es sind jedoch auch Kneter, Walzen oder Rührgefäße zur Herstellung geeignet. Weiterer Gegenstand der Erfindung ist daher ein Verfahren zur Herstellung der erfindungsgemäßen Mischungen in der Schmelze, vorzugsweise bei Temperaturen von 280 bis 320° C.

Zur Herstellung der erfindungsgemäßen Mischungen kann es angezeigt sein, zunächst ein Konzentrat aus den Komponenten A und B herzustellen, und dieses mit einer größeren Menge A auf den gewünschten Gehalt an B zu verdünnen. Die Herstellung der Konzentrate kann in den vorgenannten Mischaggregaten bei Temperaturen zwischen 50° C und 320° C, vorzugsweise 150° C und 320° C erfolgen.

Darüberhinaus ist die Herstellung der Mischungen auch durch gemeinsame Ausdampfextrusion der Mischungskomponenten aus einem Gemisch der jeweiligen Lösungen in aliphatischen und aromatischen Halogenkohlenwasserstoffen, wie Dichlormethan und Monochlorbenzol, über geeignete Extruder mit einer Vorrichtung zur Voreindampfung möglich.

Die Formmassen der vorliegenden Erfindung können zur Herstellung von Formkörpern jeder Art nach bekannten Verfahren verwendet werden. Insbesondere können Formkörper durch Extrusion oder Spritzguß auf den hierfür üblichen Aggregaten hergestellt werden. Beispiele für herstellbare Formkörper sind Karosserieteile und Gehäuseteile z.B. für elektrische Geräte und Apparaturen wie Haushaltsgeräte oder Platten für den Bausektor oder Folien.

Nachfolgend wird die Erfindung durch Beispiele veranschaulicht und mit dem Stand der Technik verglichen.

Beispiele

Es wurden folgende Legierungskomponenten eingesetzt:

A1) Homopolycarbonat auf Basis von Bisphenol A mit einer relativen Lösungsviskosität von 1,29, hergestellt unter Verwendung von Phenol als Kettenabbrecher.

A2) Copolycarbonat auf Basis von Bisphenol A und 5 Gew.-% Polydimethylsiloxan der mittleren Blocklänge ($P_n$) 40 mit einer relativen Lösungsviskosität von 1,29 hergestellt unter Verwendung von Phenol als Kettenabbrecher gemäß DE-OS 3 334 782.

B1) Polyisobutylen mit einem Molekulargewicht $M_v$ von 60.000 g/Mol.

B2) Polyisobutylen mit einem Molekulargewicht $M_v$ von 400.000 g/Mol.

B3) Polyisobutylen mit einem Molekulargewicht $M_v$ von 800.000 g/Mol.

Zur Herstellung der Mischungen wurde zunächst über eine Lösung der Komponenten Konzentrate der Polyisobutylene im betreffenden Polycarbonat gefertigt. Die gewünschten Einstellungen wurden durch Compoundierung der Konzentrate mit dem jeweiligen Polycarbonat und Pigmentkonzentrat auf Basis Polycarbonat, üblichem Farbmittel und $TiO_2$-Pigment bei 290° C auf einem Doppelwellenextruder homogenisiert.

Die Herstellung der Prüfkörper erfolgte bei 310° C Massetemperatur auf einem Spritzgießaggregat.

Zur praxisnahen Bewertung der Legierungen wurden pigmentierte Einstellungen gefertigt, indem Pigmentkonzentrate aus organischem Farbmittel und $TiO_2$-Pigment (PK1 BZW. PK2) auf Basis der Polycarbonate A1 bzw. A2 hergestellt und den entsprechenden Blends zugesetzt wurden.

Zur Beurteilung des Verarbeitungsverhaltens wurden auf einem sogenannten Streifenwerkzeug mit zentralem Stangenanguß Streifen (Maße: 435 mm x 50 mm x 2 mm) hergestellt, deren Oberfläche insbesondere in Angußnähe ohne optische Hilfsmittel auf das Auftreten von Delamination untersucht wurde.

Zur Bestimmung der Zusammenfließ- oder Bindenahtfestigkeit wurden Prüfkörper mit den Maßen 50 mm x 6 mm x 4 mm hergestellt, die an beiden Längsenden je einen Anguß besitzen und in der Prüfkörpermitte eine Bindenaht aufweisen. Zur Prüfung wurde die Schlagzähigkeit $a_n$ gemäß DIN 53 453 an

dieser Bindenaht bei Raumtemperatur bestimmt.

Zur Bestimmung der Benzinbeständigkeit wurden Prüfkörper mit den Maßen 80 mm × 10 mm × 4 mm hergestellt, die auf Beigeschablonen verschiedener Krümmungsradien so eingespannt wurden, daß Randfaserdehnungen $\epsilon_R$ von 0,4 % bzw. 1,0 % resultierten. Die Schablonen wurden mit aufgebrachter Probe 15 Minuten bei 70 °C in einem Wärmeschrank (mit Luftdurchwirbelung nach DIN 50 011, 2,3) gelagert.

Die Schablonen mit den Proben wurden aus dem Schrank entnommen und unmittelbar danach ein Prüfkraftstoffgetränkter Wattebausch aufgelegt. Als Prüfkraftstoff wurde eine Testbenzin nach DIN 51 604 verwendet, das sich aus 50 Vol.-% Toluol, 30 Vol.-% Isooctan, 15 Vol.-% Diisobutylen und 5 Vol.-% Ethanol zusammensetzt. Nach 15 Minuten Einwirkungsdauer wurde der Wattebausch entfernt und weitere 15 Minuten abgewartet, um die Probe ablüften zu lassen.

Anschließend wurden die Prüfkörper mit dem unbewaffneten Auge wie folgt bewertet:

| Stufe | Merkmal |
|---|---|
| 1 | keine sichtbare Veränderung |
| 2 | Oberfläche vermattet |
| 3 | feine Risse |
| 4 | starke Risse, Bruch. |

Die Ergebnisse sind in folgender Tabelle zusammengefaßt:

| Beispiel | 1 | 2 | 3 | 4 | 5 | 6* | 7* | 8* |
|---|---|---|---|---|---|---|---|---|
| Komponenten: | | | | - Gew.-% - | | | | |
| A1 | 96 | 93,5 | 93,5 | 93,5 | | | | |
| A2 | | | | | 96 | 93,5 | 93,5 | 93,5 |
| B1 | | 2,5 | | | | 2,5 | | |
| B2 | | | 2,5 | | | | 2,5 | |
| B3 | | | | 2,5 | | | | 2,5 |
| PK1 | 4 | 4 | 4 | 4 | | | | |
| PK2 | | | | | 4 | 4 | 4 | 4 |
| Bindenahtfestigkeit: | | | | - kJ/m² - | | | | |
| | n.g. | 29 | 5,4 | 10,3 | 75+ | 50+ | 64+ | 66+ |
| Delamination: | | | | | | | | |
| | nein | stark | sehr stark | ja | nein | nein | nein | nein |
| Benzinbeständigkeit: | | | | - Stufen - | | | | |
| $\varepsilon_R$ 0,4 % | 4 | 2 | 2 | 3 | 3 | 2 | 2 | 2 |
| $\varepsilon_R$ 1,0 % | 4 | 3 | 4 | 4 | 4 | 2 | 2 | 2 |

* = erfindungsgemäße Beispiele
n.g. = nicht gebrochen;
\+ = angebrochen.

## Patentansprüche

1. Mischungen aus

   A) 95 bis 99,5 Gew.-% Polycarbonat und
   B) 5 bis 0,5 Gew.-% Polyisobutylen - Homopolymeren oder Poly - Isobutylen - Iscpren - Copolymeren mit einem Isopren - Gehalt von 0,5 bis 7 Gew.-% bezogen auf Copolymer,

   wobei sich die Prozentangaben jeweils auf die Summe A + B beziehen,

   die dadurch gekennzeichnet sind, daß das Polycarbonat A ein Polydiorganosiloxan-Polycarbonat-Blockcokondensat mit einer relativen Viskosität (gemessen an einer Lösung von 0,5 g Blockcokondensat in 1 dl Dichlormethan bei 25 °C) von 1,15 bis 1,38, vorzugsweise von 1,20 bis 1,35, und einem Gehalt an Polydiorganosiloxan-Einheiten von 0,5 bis 10 Gew.-%, ist, wobei diese Polydiorgancsiloxan-Einheiten im Mittel 5 bis 100 Siliciumatome je Einheit enthalten.

2. Mischung nach Anspruch 1, dadurch gekennzeichnet, daß die Komponente B ein Polyisobutylen-Homopolyer mit einem mittleren Molekulargewicht $M_v$ (Viskositätsmittel) von etwa 50.000 bis etwa

4.000.000 ist.

3. Mischungen nach Anspruch 1, dadurch gekennzeichnet, daß die Komponente B ein Copolymer aus 93 bis 99,5 Gew.-% Isobutylen und 7 bis 0,5 Gew.% Isopren mit einem mittleren Molekulargewicht $M_v$ - (Viskositätsmittel) von etwa 50.000 bis etwa 4.000.000 ist.

4. Mischung nach Anspruch 2 oder 3, dadurch gekennzeichnet, daß die Komponente A eine Mischung aus polysiloxanfreien, thermoplastischen Polycarbonaten und Polydiorganosiloxan-Polycarbonat-Blockcokondensat ist, die so zusammengesetzt ist, daß der Gesamtgehalt an Polydiorganosiloxan-Einheiten in der Mischung wiederum 0,5 bis 10 Gew.-% beträgt.

5. Mischung nach Anspruch 1 bis 4, dadurch gekennzeichnet, daß sie zusätzlich bis zu 5 Gew.-%, bezogen auf das Gesamtgewicht aus den Komponenten A+B, Ethylenhomo- bzw. -copolymerisate enthält, deren Reste bis zu 30 Gew.-%, bezogen auf Ethylencopolymerisat, aus Resten anderer copolymerisierbarer Monomerer bestehen.

## Claims

1. Blends of
   A) 95 to 99.5% by weight polycarbonate and
   B) 5 to 0.5% by weight polyisobutylene homopolymers or polyisobutylene/isoprene copolymers having an isoprene content of 0.5 to 7% by weight, based on copolymer,
   
   the percentages being based on the sum of A + B,
   characterized in that the polycarbonate A is a polydiorganosiloxane/polycarbonate block co-condensate having a relative viscosity (as measured on a solution of 0.5 g block co-condensate in 1 dl dichloromethane at 25°C) of 1.15 to 1.38 and preferably 1.20 to 1.35 and a content of polydiorganosiloxane units of 0.5 to 10% by weight, the polydiorganosiloxane units containing on average 5 to 100 silicon atoms per unit.

2. A blend as claimed in claim 1, characterized in that component B is a polyisobutylene homopolymer having an average molecular weight $M_v$ (viscosity average) of about 50,000 to about 4,000,000.

3. Blends as claimed in claim 1, characterized in that component B is a copolymer of 93 to 99.5% by weight isobutylene and 7 to 0.5% by weight isoprene having an average molecular weight $M_v$ (viscosity average) of about 50,000 to about 4,000,000.

4. A blend as claimed in claim 2 or 3, characterized in that component A is a mixture of polysiloxane-free thermoplastic polycarbonates and polydiorganosiloxane/polycarbonate block co-condensate of which the composition is such that the total content of polydiorganosiloxane units in the mixture is again 0.5 to 10% by weight.

5. A blend as claimed in claims 1 to 4, characterized in that it additionally consists of up to 5% by weight, based on the total weight of components A + B, ethylene homo- or copolymers in which up to 30% by weight of the residues, based on ethylene copolymer, consist of residues of other copolymerizable monomers.

## Revendications

1. Mélanges de
   A) 95 à 99,5 % en poids de polycarbonate et
   B) 5 à 0,5 % en poids d'homopolymères polyisobutyléniques ou de copolymères du type polyisobutylèneisoprène ayant une teneur en isoprène de 0,5 à 7 % en poids par rapport au copolymère,
   
   les indications de pourcentage se rapportant dans chaque cas à la somme A+B,
   qui sont caractérisés en ce que le polycarbonate A est un co-condensat polydiorganosiloxane-polycarbonate séquencé ayant une viscosité relative (mesurée sur une solution de 0,5 g de co-condensat séquencé dans 1 dl de dichlorométhane à 25°C) de 1,15 à 1,38, de préférence de 1,20 à 1,35, et une teneur en motifs polydiorganosiloxane de 0,5 à 10 % en poids, ces motifs polydiorganosiloxane contenant en moyenne 5 à 100 atomes de silicium par motif.

2. Mélange suivant la revendication 1, caractérisé en ce que le composant B est un homopolymère polyisobutylénique ayant un poids moléculaire moyen $M_v$ (moyenne en viscosité) d'environ 50 000 à environ 4 000 000.

3. Mélanges suivant la revendication 1, caractérisés en ce que le composant B est un copolymère de 93 à 99,5 % en poids d'isobutylène et de 7 à 0,5 % en poids d'isoprène ayant un poids moléculaire moyen $M_v$ (moyenne en viscosité) d'environ 50 000 à environ 4 000 000.

4. Mélange suivant la revendication 2 ou 3, caractérisé en ce que le composant A est un mélange de polycarbonates thermoplastiques dépourvus de polysiloxane et un co-condensat polydiorganosiloxane-polycarbonate séquencé, mélange qui est composé de façon telle que sa teneur totale en motifs polydiorganosiloxane s'élève là encore à 0,5-10 % en poids.

5. Mélange suivant les revendications 1 à 4, caractérisé en ce qu'il contient en outre jusqu'à 5 % en poids, par rapport au mélange total des composants A + B, d'homopolymérisats et de copolymérisats d'éthylène dont les restes sont constitués jusqu'à 30 % en poids, par rapport au copolymérisat éthylénique, de restes d'autres monomères copolymérisables.